# EUROPÄISCHE PATENTSCHRIFT

(11) **EP 0 867 464 B1**
(45) Veröffentlichungstag und Bekanntmachung des Hinweises auf die Patenterteilung: **04.02.2004**
(21) Anmeldenummer: 98104527.1
(22) Anmeldetag: 13.03.1998
(51) Int. Cl.: C08J 9/00

(54) **Verwendung von organofunktionell modifizierten Polysiloxanen bei der Herstellung von Polyurethanschaum**
Use of organofunctional modified polysiloxanes for the preparation of polyurethane foam
Utilisation de polysiloxanes modifiés par des organofonctions pour la préparation de mousses de polyuréthane

(30) Priorität: 26.03.1997 DE 19712628
(43) Veröffentlichungstag der Anmeldung: 30.09.1998
(73) Patentinhaber: Goldschmidt AG, 45127 Essen (DE)
(72) Erfinder: Boinowitz, Tammo, Dr., 45131 Essen (DE); Burkhart, Georg, Dr., 45239 Essen (DE); Langenhagen, Rolf-Dieter, 45529 Hattingen (DE); Schlachter, Ingo, Dr., 45277 Essen (DE); Weier, Andreas, Dr., 45289 Essen (DE)

(56) Entgegenhaltungen:
- US-A- 4 206 289

## Beschreibung

Die Erfindung betrifft die Verwendung von Polysiloxan-Polyoxyalkylen-Copolymeren, die modifizierte Polyoxyalkylenbausteine enthalten, als Additiv bei der Herstellung von Polyurethanschäumen.

Polysiloxan-Polyoxyalkylen-Blockcopolymere werden bei der Herstellung von Polyurethanschäumen verwendet. Sie ermöglichen die Ausbildung einer gleichmäßigen Porenstruktur und stabilisieren den Schaum während des Herstellungsprozesses.

Nicht alle Polysiloxan-Polyoxyalkylen-Blockcopolymere sind für diese Anwendung brauchbar. Die Verwendbarkeit wird durch ein fein einzustellendes Gleichgewicht der Polysiloxanblöcke und der Polyoxyalkylenblöcke im Copolymeren beeinflußt. Der Aufbau der beiden Blöcke ist somit von großer Bedeutung. Die Strukturen der Blöcke können mit einer Vielzahl von Parametern variiert werden.

Der Polyoxyalkylenblock kann bezüglich seiner Zusammensetzung aus den Oxyalkyleneinheiten verändert werden, insbesondere sind Oxyethylen, Oxypropylen und Oxybutylen zu nennen. Unter Zusammensetzung muß in diesem Zusammenhang sowohl die relative Anzahl als auch die Anordnung der Oxyalkyleneinheiten verstanden werden. Weiterhin können das Molekulargewicht und die Endgruppe des Polyoxyalkylenblocks variiert werden. Der Polyoxyalkylenblock kann über eine hydrolysestabile Si-C-Bindung oder eine weniger hydrolysestabile Si-O-C-Bindung mit dem Polysiloxan verknüpft sein.

Das Polysiloxan kann bezüglich der Anzahl der Siloxaneinheiten, der Verzweigungen und der Zahl der Verknüpfungsmöglichkeiten mit dem Polyoxyalkylen verändert werden.

Die Effektivität eines Polysiloxan-Polyoxyalkylen-Copolymeren bei der Schaumstabilisierung kann nur in sehr begrenztem Maße vorausgesagt werden. Die Expertise in diesem Bereich besteht also darin, die Auswirkungen der möglichen Strukturveränderungen empirisch zu untersuchen.

Polysiloxan-Polyoxyalkylen-Blockcopolymere sind in zahlreichen Publikationen beschrieben. Die folgenden Zitate sind daher nur als Auswahl zu sehen.

DE-A-15 70 647 beschäftigt sich mit der Si-O-C-Verknüpfung von Chloropolysiloxanen mit Polyoxyalkyleneinheiten, von denen 40 bis 70 % Molekulargewichte von 1000 bis 3000 haben, vorzugsweise mit sekundären OH-Gruppen, und bis zu 50 OH-Äquivalentprozente ein Molekulargewicht von 130 bis 3500 aufweisen, deren Aufbau aus Ethylenoxid und/oder Propylenoxid besteht. Bevorzugt wird ein Molekulargewicht bis zu 1750.

DE-A-16 94 366: Verwendung von Polysiloxan-Polyoxyalkylen-Copolymeren mit folgendem Aufbau als Schaumstabilisatoren:
25 bis 70 % des Gewichtes bestehen aus einem Polyoxyalkylen mit einem mittleren Molekulargewicht von 1600 bis 4000, mit einem Ethylenoxidgehalt von 20 bis 100 Gew.-%, das andere Monomere ist, falls vorhanden, Propylenoxid oder optional höhere Alkylenoxide, und
30 bis 75 Gew.-% aus einem Polyoxyalkylen mit einem mittleren Molekulargewicht von 400 bis 1200, mit einem Ethylenoxidgehalt von 65 bis 100 Gew.-%, das andere Monomere ist, falls vorhanden, Propylenoxid oder optional höhere Alkylenoxide.

EP-A-0 275 563: Das hier beschriebene Blockcopolymer ist aus drei verschiedenen Polyoxyalkyleneinheiten aufgebaut. Ein Block enthält 20 bis 60 Gew.-% Oxyethyleneinheiten und ein Molekulargewicht von 3000 bis 5500, ein weiterer Block enthält 20 bis 60 Gew.-% Oxyethyleneinheiten bei einem Molekulargewicht von 800 bis 2900 und ein dritter Block besteht nur aus Polyoxypropylen und hat ein Molekulargewicht von 130 bis 1200.

Die vorliegende Erfindung behandelt die Verwendung von verbesserten Polysiloxan-Polyoxyalkylen-Blockcopolymeren als Additive bei der Herstellung von Polyurethanschäumen. Die Optimierung besteht in einer Modifikation der Polyoxyalkylenbausteine. Die Verwendung der erfindungsgemäßen Additivzusammensetzung erlaubt es, in sehr feinen Bereichen die Eigenschaften der mit diesen Substanzen hergestellten Polyurethanschäume einzustellen.

Gegenstand vorliegender Erfindung ist deshalb die Verwendung von organofunktionell modifizierten Polysiloxanen der allgemeinen Formel I 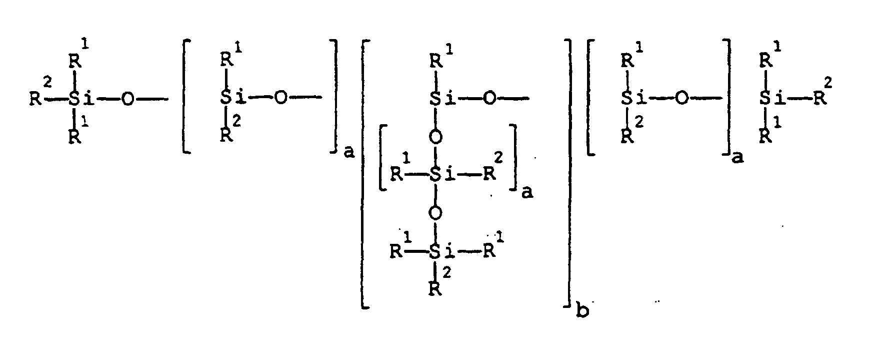 als Additiv bei der Polyurethanschaumherstellung, wobei die Reste
- R¹: Alkylreste mit 1 bis 4 Kohlenstoffatomen oder Arylreste sind, jedoch mindestens 80 % der Reste R¹ Methylreste sind,
- R²: R¹ und/oder R³ und/oder R⁴ sind, mit der Maßgabe, daß pro Silicon-Polyether-Copolymermolekül mindestens ein Rest R³ vorhanden ist,
R³ ein Polyetherrest der Formel II
-(Y)ₑ[O(C₂H_{4-d}R'_{d}O)ₘ(CₓH₂ₓO)ₚZ]_{w} ist, mit der Maßgabe, daß
e = 0 oder 1,
w = 1 bis 4,
d = 1 bis 3,
m ≥ 1,
x = 2 bis 4 und
p ≥ 1 sind, und
Y ein (w+1)-bindiger Kohlenwasserstoffrest ist, der auch verzweigt sein kann,
R' ausgewählt aus der Gruppe der einwertigen, gegebenenfalls aromatischen Kohlenwasserstoffreste von Ci bis C₁₈ ist, mit der Maßgabe, daß auch unterschiedliche Reste miteinander kombiniert werden können, jedoch pro Silicon-Polyether-Copolymermolekül mindestens ein Rest R' ein gegebenenfalls substituierter, aromatischer Rest ist,
Z ein Wasserstoffrest oder ein einwertiger organischer Rest ist, die Summe m + p = 3 bis 100 ist,
R⁴ ein Polyetherrest der Formel III
-(F)_{f}[O(CₓH₂ₓO)ᵣZ]_{g} ist, mit der Maßgabe, daß
f = 0 oder 1,
x = 2 bis 4,
g = 1 bis 4 und r ≥ 1 sind,
F ein (g+1)-bindiger Kohlenwasserstoffrest ist, der auch verzweigt sein kann,
- a: eine Zahl von 1 bis 100 ist, wenn b eine Zahl von 6 bis 8 ist,
- a: eine Zahl von 1 bis 200 ist, wenn b eine Zahl von 3 bis 6 ist,
- a: eine Zahl von 1 bis 300 ist, wenn b eine Zahl von 0 bis 3 ist,
- b: = 0 bis 8.

Das Siloxangerüst kann geradkettig (b = 0) oder aber verzweigt sein (> 0 bis 8). Der Wert von a kann erfahrungsgemäß nur in der angegebenen Weise mit Werten von b kombiniert werden, da ansonsten die erhöhte Viskosität der Polymermoleküle zur Vergelung führt und eine Handhabung unmöglich macht. Die erfindungsgemäßen Verbindungen sind daher bei Raumtemperatur verarbeitbar. Der Wert von b wie auch der Wert von a sind, wie dem Fachmann geläufig ist, als durchschnittliche Werte im Polymermolekül zu verstehen, da die erfindungsgemäß zu verwendenden Polysiloxane in Form von - im Regelfall - äquilibrierten Gemischen vorliegen.

Die Reste R¹ sind Alkylreste mit 1 bis 4 Kohlenstoffatomen, wie Methyl-, Ethyl-, Propyl- oder Butylreste, oder Arylreste, wobei Phenylreste bevorzugt sind. Herstellungs- und preisbedingt sind Methylreste bevorzugt, so daß mindestens 80 % der Reste R¹ Methylreste sein müssen. Besonders bevorzugt sind solche Polysiloxane, bei denen alle Reste R¹ Methylreste sind.

Das Wesen der vorliegenden Erfindung besteht insbesondere darin, daß organofunktionell modifizierte Polysiloxane verwendet werden, welche eine besondere Kombination von Polyethern enthalten, wobei der Rest R' von R³ vorzugsweise ein Phenylrest, gegebenenfalls ein substituierter Aromat, ist. Durch gezielte Auswahl solch eben genannter Polyetherreste, die auch mit Polyetherresten kombiniert werden können, wie sie als Rest R⁴ bestimmt werden, gelingt es, in sehr feinen Abstufungen eine Balance der organischen Reste einzustellen. Wie die nachfolgenden Beispiele zeigen, die zur Verdeutlichung dienen, aber keinerlei Einschränkung darstellen sollen, bestehen die Wirkungen des Additivs z. B. bei der Herstellung von Polyurethanweichschäumen in der Kollapsvermeidung und der Optimierung des Erreichens niedriger Raumgewichte. Weiterhin sind die erfindungsgemäß verwendeten modifizierten Polysiloxane in der Lage, Verbesserungen in anderen Polyurethanschaumformulierungen zu bewirken. So wird im Hartschaum beispielsweise die Zellfeinheit signifikant erhöht.

Wie dem Fachmann geläufig ist, sind sowohl die durchschnittlichen Molekulargewichte der Siloxanketten als auch der verwendeten Polyether stark vom zu stabilisierenden Schaumtyp abhängig. Als günstig haben sich z. B. für den Weichschaum, egal ob mit (siehe EP-A-0 645 226) oder ohne Verwendung unter Druck stehender Gase als Treibmittel, Siloxankettenlängen zwischen 40 und 200 sowie recht langkettige Polyether (MG bis 4000 g/Mol) erwiesen. Die Hartschaumanwendung erfordert kürzere Siloxan-(< 50 SiR₂O-Einheiten) und Polyetherketten (< 1500 g/Mol). Derartig unterschiedliche Stabilisatormolekulargewichte lassen keine generelle Aussage zum minimal wirksamen Aromatengehalt zu. Während demzufolge im Hartschaum bei kleinen Molekülen schon eine Modifikation mit 1 Mol Styroloxid pro Stabilisatormolekül signifikante Verbesserungen zeigt, beginnt die Wirksamkeitsgrenze beim Weichschaum erst bei höheren Gehalten an aromatischen Gruppen am Polyether.

Die als R³ und R⁴ beschriebenen Polyetherreste werden durch Umsetzung eines Startalkohols, der bevorzugt Allylalkohol ist, durch Anlagerung von Monomeren gewonnen. Geeignet sind z. B. Ethylenoxid, Propylenoxid, Tetrahydrofuran, Butylenoxid, iso-Butylenoxid in R⁴ mit der Formel -(F)_{f}[O(CₓH₂ₓO)ᵣZ]_{g}, mit der Maßgabe, daß f = 0 oder 1, x = 2 bis 4, g = 1 bis 4 und r ≥ 1 sind, sowie für die aromatenhaltigen Polyetheranteile von R³ zusätzlich z. B. Styroloxid, α-Methylstyroloxid.

R³ stellt einen Polyetherrest mit der Formel
-(Y)ₑ[O(C₂H_{4-d}R'_{d}O)ₘ(CₓH₂ₓO)ₚZ]_{w} dar, mit der Maßgabe, daß e = 0 oder 1, w = 1 bis 4, d = 1 bis 3, m ≥ 1, x = 2 bis 4 und p ≥ 1 sind.

Dabei kann die Zusammensetzung der Monomere beliebig gewählt sein, so daß beispielsweise Styroloxid-, Ethylenoxid- und Propylenoxid-Blöcke enthalten sein können. Außerdem ist auch eine Mischung der Monomere einsetzbar, so daß Polyetherreste erhalten werden, in denen die Einheiten in statistischer Verteilung vorliegen. Die Indices m, p und r sind unabhängig voneinander zu wählende Zahlen. Z ist in beiden Resten R³ und R⁴ unabhängig voneinander ein Wasserstoffatom oder ein einwertiger organischer Rest, vorzugsweise ein Acetyl- oder ein Methylrest. Im Rest R⁴ hat der Index r vorzugsweise einen Zahlenwert von 8 bis 100. Im Rest R³ hat der Index m vorzugsweise einen Zahlenwert von 1 bis 100, besonders bevorzugt von 5 bis 50, der Index p vorzugsweise einen Zahlenwert von 1 bis 100, besonders bevorzugt von 5 bis 50. Bei diesen Indices handelt es sich um durchschnittliche Zahlen, da es bekannt ist, daß bei der Anlagerung von Epoxiden an Alkohole ein Gemisch von Verbindungen unterschiedlicher Kettenlänge erhalten wird.

Die Reste R³ und R⁴ können durch zwei verschiedene Arten der chemischen Umsetzung an ein Polysiloxan gebunden werden. Durch Hydrolyse von Chlorsiloxanen mit Polyethern unter Abspaltung von Chlorwasserstoff wird eine SiOC-Bindung geknüpft. Die Herstellung dieser Verbindungen kann der DE-C-10 12 602, DE-C-10 40 251 und DE-C-11 20 147 sowie der US-A-3 115 512 entnommen werden. Die zweite Möglichkeit ist die sogenannte Hydrosilylierungsreaktion, bei der die Reste R³ und R⁴ an das Molekül des Polysiloxans durch Addition an SiH-Gruppen des Polysiloxans in Anwesenheit eines Hydrosilylierungskatalysators, unter Knüpfung einer SiC-Bindung, eingeführt wird. Nach dem Stand der Technik werden für die letztgenannte Möglichkeit Platin-Katalysatoren, wie zum Beispiel cis-Dichlordiaminplatin(II) oder Hexachloroplatin(IV)säure, verwendet. Letztgenannte Möglichkeit ist beispielsweise in US-A-2 846 458 sowie in DE-A-12 20 615 und DE-A-11 53 166 beschrieben.

### Beispiel 1

In einen Glaskolben, der mit Rührer, Thermometer, Gaseinleitung und Heizpilzhaube ausgestattet ist, werden folgende drei Polyether und 450 g Toluol vorgelegt:
a) 128 g eines Polyethers mit einem durchschnittlichen Molekulargewicht von 1500 g/Mol, einem Oxyethylenanteil von 15 %, einem Oxypropylenanteil von 45 % und einem Oxyphenylethylenanteil von 40 %. Eine OH-Funktion ist mit Allylalkohol verethert.
b) 190 g eines Polyethers mit einem durchschnittlichen Molekulargewicht von 3800 g/Mol, einem Oxyethylenanteil von 40 % und einem Oxypropylenanteil von 60 %. Eine OH-Funktion ist mit Allylalkohol, die andere mit Methanol verethert.
c) 21 g eines Polyethers mit einem durchschnittlichen Molekulargewicht von 1400 g/Mol, einem Oxyethylenanteil von 40 % und einem Oxypropylenanteil von 60 %. Eine OH-Funktion ist mit Allylalkohol, die andere mit Methanol verethert.

Die Rest-OH-Zahl der Polyether b) und c) beträgt 9 mg KOH/g.

Während einer azeotropen Wasserdestillation werden 150 ml des Toluols unter Stickstoffabdeckung abdestilliert. Danach wird der Kolben mit einem Rückflußkühler und einem Tropftrichter ausgestattet. Bei einer Temperatur von 105 °C werden 0,2 g einer 10 %igen Lösung von H₂PtCl₆ · 6 H₂O in iso-Propanol zugetropft und 5 min gerührt. Danach werden 80,4 g (=0,1 Mol SiH) eines Siloxans mit folgender durchschnittlicher Zusammensetzung

(CH₃)₃SiO-[(CH₃)₂SiO-]₅₈[(CH₃)HSiO-]₆Si(CH₃)₃

innerhalb eines Zeitraumes von 20 min zugetropft. Nach 4 h beträgt der SiH-Umsatz 98 % (Bestimmung des Wasserstoffs bei alkalischer Abspaltung in n-Butanol). Das Produkt wird mit 2 g Bentonit 30 min gerührt und dann filtriert. Nach dem Abdestillieren des restlichen Toluols bei 80 °C im Vakuum (20 mbar) wird ein klares gelbliches Produkt erhalten.

### Beispiel 2

In einen Glaskolben, der mit Rührer, Thermometer, Gaseinleitung und Heizpilzhaube ausgestattet ist, werden folgende drei Polyether und 45 g Toluol vorgelegt:
a) 127 g eines Polyethers mit einem durchschnittlichen Molekulargewicht von 1500 g/Mol, einem Oxyethylenanteil von 35 %, einem Oxypropylenanteil von 50 % und einem Oxyphenylethylenanteil von 15 %. Eine OH-Funktion ist mit Allylalkohol verethert.
b) 190 g eines Polyethers mit einem durchschnittlichen Molekulargewicht von 3800 g/Mol, einem Oxyethylenanteil von 40 % und einem Oxypropylenanteil von 60 %. Eine OH-Funktion ist mit Allylalkohol, die andere mit Methanol verethert.
c) 21 g eines Polyethers mit einem durchschnittlichen Molekulargewicht von 1400 g/Mol, einem Oxyethylenanteil von 40 % und einem Oxypropylenanteil von 60 %. Eine OH-Funktion ist mit Allylalkohol, die andere mit Methanol verethert.

Die Rest-OH-Zahl der Polyether b) und c) beträgt 9 mg KOH/g.

Während einer azeotropen Wasserdestillation werden 150 ml des Toluols unter Stickstoffabdeckung abdestilliert. Danach wird der Kolben mit einem Rückflußkühler und einem Tropftrichter ausgestattet. Bei einer Temperatur von 105 °C werden 0,2 g einer 10 %igen Lösung von H₂PtCl₆ · 6 H₂O in iso-Propanol zugetropft und 5 min gerührt. Danach werden 80,4 g (= 0,1 Mol SiH) eines Siloxans mit folgender durchschnittlicher Zusammensetzung

(CH₃)₃SiO-[(CH₃)₂SiO-]₅₈[(CH₃)HSiO-]₆Si(CH₃)₃

innerhalb eines Zeitraumes von 20 min zugetropft. Nach 4 h beträgt der SiH-Umsatz 98 % (Bestimmung des Wasserstoffs bei alkalischer Abspaltung in n-Butanol). Das Produkt wird mit 2 g Bentonit 30 min gerührt und dann filtriert. Nach dem Abdestillieren des restlichen Toluols bei 80 °C im Vakuum (20 mbar) wird ein klares gelbliches Produkt erhalten.

### Beispiel 3

In einen Glaskolben, der mit Rührer, Thermometer, Gaseinleitung und Heizpilzhaube ausgestattet ist, werden folgende zwei Polyether und 450 g Toluol vorgelegt:
a) 153 g eines Polyethers mit einem durchschnittlichen Molekulargewicht von 1500 g/Mol, einem Oxyethylenanteil von 70 % und einem Oxyphenylethylenanteil von 30 %. Eine OH-Funktion ist mit Allylalkohol, die andere mit Methanol verethert.
b) 332 g eines Polyethers mit einem durchschnittlichen Molekulargewicht von 3800 g/Mol, einem Oxyethylenanteil von 40 % und einem Oxypropylenanteil von 60 %. Eine OH-Funktion ist mit Allylalkohol, die andere mit Methanol verethert.

Während einer azeotropen Wasserdestillation werden 150 ml des Toluols unter Stickstoffabdeckung abdestilliert. Danach wird der Kolben mit einem Rückflußkühler und einem Tropftrichter ausgestattet. Bei einer Temperatur von 105 °C werden 0,2 g einer 10 %igen Lösung von H₂PtCl₆ · 6 H₂O in iso-Propanol zugetropft und 5 min gerührt. Danach werden 80,4 g (= 0,1 Mol SiH) eines Siloxans mit folgender durchschnittlicher Zusammensetzung

(CH₃)₃SiO-[(CH₃)₂SiO-]₅₈[(CH₃)HSiO-]₆Si(CH₃)₃

innerhalb eines Zeitraumes von 20 min zugetropft. Nach 4 h beträgt der SiH-Umsatz 98 % (Bestimmung des Wasserstoffs bei alkalischer Abspaltung in n-Butanol). Das Produkt wird mit 2 g Bentonit 30 min gerührt und dann filtriert. Nach dem Abdestillieren des restlichen Toluols bei 80 °C im Vakuum (20 mbar) wird ein klares gelbliches Produkt erhalten.

### Beispiel 4

### (Vergleichsbeispiel)

In einen Glaskolben, der mit Rührer, Thermometer, Gaseinleitung und Heizpilzhaube ausgestattet ist, werden folgende zwei Polyether und 450 g Toluol vorgelegt:
a) 128 g eines Polyethers mit einem durchschnittlichen Molekulargewicht von 1400 g/Mol, einem Oxyethylenanteil von 20 % und einem Oxypropylenanteil von 80 %. Eine OH-Funktion ist mit Allylalkohol, die andere mit Methanol verethert.
b) 332 g eines Polyethers mit einem durchschnittlichen Molekulargewicht von 3800 g/Mol, einem Oxyethylenanteil von 40 % und einem Oxypropylenanteil von 60 %. Eine OH-Funktion ist mit Allylalkohol, die andere mit Methanol verethert.

Während einer azeotropen Wasserdestillation werden 150 ml des Toluols unter Stickstoffabdeckung abdestilliert. Danach wird der Kolben mit einem Rückflußkühler und einem Tropftrichter ausgestattet. Bei einer Temperatur von 105 °C werden 0,2 g einer 10 %igen Lösung von H₂PtCl₆ · 6 H₂O in iso-Propanol zugetropft und 5 min gerührt. Danach werden 80, 4 g (= 0,1 Mol SiH) eines Siloxans mit folgender durchschnittlicher Zusammensetzung

(CH₃)₃SiO-[(CH₃)₂SiO-]₅₈[(CH₃)HSiO-]₆Si(CH₃)₃

innerhalb eines Zeitraumes von 20 min zugetropft. Nach 4 h beträgt der SiH-Umsatz 98 % (Bestimmung des Wasserstoffs bei alkalischer Abspaltung in n-Butanol). Das Produkt wird mit 2 g Bentonit 30 min gerührt und dann filtriert. Nach dem Abdestillieren des restlichen Toluols bei 80 °C im Vakuum (20 mbar) wird ein klares gelbliches Produkt erhalten.

### Beispiel 5

### (Vergleichsbeipiel)

In einen Glaskolben, der mit Rührer, Thermometer, Gaseinleitung und Heizpilzhaube ausgestattet ist, werden folgende drei Polyether und 450 g Toluol vorgelegt:
a) 73,6 g eines Polyethers mit einem durchschnittlichen Molekulargewicht von 1400 g/Mol, einem Oxyethylenanteil von 50 %, einem Oxypropylenanteil von 50 %. Eine OH-Funktion ist mit Allylalkohol, die andere mit Methanol verethert.
b) 201,2 g eines Polyethers mit einem durchschnittlichen Molekulargewicht von 4000 g/Mol, einem Oxyethylenanteil von 50 % und einem Oxypropylenanteil von 50 %. Eine OH-Funktion ist mit Allylalkohol, die andere mit Methanol verethert.
c) 38,1 g eines Polyethers mit einem durchschnittlichen Molekulargewicht von 1500 g/Mol und einem Oxypropylenanteil von 100 %. Eine OH-Funktion ist mit Allylalkohol, die andere mit Methanol verethert.

Während einer azeotropen Wasserdestillation werden 150 ml des Toluols unter Stickstoffabdeckung abdestilliert. Danach wird der Kolben mit einem Rückflußkühler und einem Tropftrichter ausgestattet. Bei einer Temperatur von 105 °C werden 0,2 g einer 10 %igen Lösung von H₂PtCl₆ · 6 H₂O in iso-Propanol zugetropft und 5 min gerührt. Danach werden 87,7 g (= 0,1 Mol SiH) eines Siloxans mit folgender durchschnittlicher Zusammensetzung

(CH₃)₃SiO-[(CH₃)₂SiO-]₁₃₀[(CH₃)HSiO-]₁₂Si(CH₃)₃

innerhalb eines Zeitraumes von 20 min zugetropft. Nach 4 h beträgt der SiH-Umsatz 98 % (Bestimmung des Wasserstoffs bei alkalischer Abspaltung in n-Butanol). Das Produkt wird mit 2 g Bentonit 30 min gerührt und dann filtriert. Nach dem Abdestillieren des restlichen Toluols bei 80 °C im Vakuum (20 mbar) wird ein klares gelbliches Produkt erhalten.

Für die Beurteilung der Effektivität des Additivs werden Polyurethanweich- und -hartschäume hergestellt.

In den Vergleichen 1 bis 4 werden zunächst die Auswirkungen der beanspruchten organomodifizierten Polyethersiloxane auf Weichschäume dargestellt, die nach folgender Verfahrensweise hergestellt werden.

Für die ersten beiden Vergleiche werden 300 Teile eines konventionellen käuflichen Polyethers für die Produktion von flexiblen Polyurethanschäumen, der durchschnittlich 3 OH-Gruppen bei einem Molekulargewicht von 3500 g/Mol trägt, bei guter Durchmischung mit 12 Teilen Wasser, 9 Teilen eines physikalischen Treibmittels, der bestimmten Menge der zu prüfenden Schaumstabilisierungskomponente, 0,33 Teilen Triethylendiamin und 0,6 Teilen Zinnoctoat versetzt. Nach der Zugabe von 125 Teilen Toluoldiisocyanat (eine 4 : 1-Mischung des 2,4- und des 2,6-Isomeren) wird das Gemisch mit einem Rührer bei 3000 U/min für 7 s intensiv durchmischt und in eine Box geschüttet. Der entstehende Schaum wird zur Bestimmung der folgenden Daten verwendet. Für Vergleich 3 wird der Anteil an Wasser und an physikalischem Treibmittel erhöht.

Im folgenden werden physikalische Daten von Polyurethanschäumen, die mit den erfindungsgemäßen Stabilisatoren Beispiel 1, 2, 3 und 70 %igen Mischungen von Beispiel 2 mit Polyether bzw. mit einem Silicon-Polyether-Copolymeren (Beispiel 5) hergestellt worden sind, mit Schäumen verglichen, für deren Herstellung das nicht erfindungsgemäße Beispiel 4 bzw. der von der OSi Specialties Inc. für den asiatischen Markt kommerziell erhältliche Stabilisator L 580 verwendet wurde. Vergleicht man die Raumdichten der mit Beispiel 1 erhaltenen Schäume mit denen bei Verwendung des kommerziellen Stabilisators L 580 erhaltenen, ergeben sich folgende Daten:

| Vergleich 1 | | |
|---|---|---|
| Verhältnis der Einsatzkonzentration des Polyethersiloxans | Raumgewicht mit Beispiel 1 [kg/m³] | Raumgewicht mit kommerziellem Stabilisator L 580 [kg/m³] |
| 1,8 | 21,40 | 22,10 |
| 1,3 | 21,55 | 22,15 |
| 1,0 | 21,55 | 22,55 |

Der Vergleich zeigt deutlich, daß die neuen Additivstrukturen, bezüglich ihrer stabilisierenden Wirkung im Schaum, gegenüber dem Stand der Technik (hier repräsentiert durch den kommerziellen Stabilisator L 580 von OSi Specialties Inc.) deutlich höhere Raumausbeuten ermöglichen, also aktiver sind.

Im Vergleich 2 wird die Rückfallhöhe untersucht. Mit Rückfall ist dabei die Höhe des Absinkens des Schaumes während der Herstellung nach der Steigphase gemeint.

Das erfindungsgemäße Siloxan-Polyether-Copolymer (Beispiel 2) wird zusätzlich in mit Polyether verdünnter Form (70 %) getestet. Der Abmischpolyether hat ein Molekulargewicht von 1000 g/Mol und einen Oxypropylenanteil von 60 %. Eine OH-Funktion ist butylverethert.

| Vergleich 2 | | | |
|---|---|---|---|
| Verhältnis der Einsatzkonzentration des Polyethersiloxans | Rückfall mit Beispiel 2 [cm] | Rückfall mit Mischung Beispiel 2 (70%) in Polyether (30%) [cm] | Rückfall mit kommerziellem Stabilisator L 580 [cm] |
| 1,8 | 0 | 0 | 0,4 |
| 1,3 | 0 | 0,1 | 0,7 |
| 1,0 | 0 | 0,2 | 1,1 |

Vergleicht man das erfindungsgemäße Beispiel 3 mit dem nicht erfindungsgemäßen Beispiel 4 (Vergleich 3), deren Strukturen sich nur durch die Styroloxidmodifizierung im Polyether unterscheiden, so ergibt sich mit Beispiel 3 unter Verwendung von 15 Teilen Wasser und 30 Teilen eines physikalischen Treibmittels in der oben angegebenen Verschäumungsrezeptur ein stabiler Schaum, der vergleichbare Ansatz unter Verwendung von Beispiel 4 verkochte.

| Vergleich 3 | | |
|---|---|---|
| Verhältnis der Einsatzkonzentration des Polyethersiloxans | Raumgewicht mit Beispiel 3 [kg/m³] | Raumgewicht mit Beispiel 4 [kg/m³] |
| 1,8 | 16,35 | Kollaps/kein stabiler Schaum |
| 1,3 | 17,95 | Kollaps/kein stabiler Schaum |
| 1,0 | 18,35 | Kollaps/kein stabiler Schaum |

Vergleich 4 zeigt die Wirksamkeit der Mischung des erfindungsgemäßen Beispiels 2 (70 Gew.-%) mit einem anderen nicht erfindungsgemäßen Siloxan-Polyether-Copolymeren (Beispiel 5, 30 Gew.-%).

| Vergleich 4 | | |
|---|---|---|
| Verhältnis der Einsatzkonzentration des Polyethersiloxans | Rückfall mit Bespiel 5 [cm] | Rückfall mit Mischung Beispiel 2 (70%) und Beispiel 5 (30%) [cm] |
| 1,8 | 0, 6 | 0, 2 |
| 1,3 | 0,8 | 0,3 |
| 1,0 | 2 | 0,5 |

Im Vergleich 5 wird das erfindungsgemäße Beispiel 3 gegen das nicht erfindungsgemäße Beispiel 4 und den kommerziell erhältlichen Stabilisator TEGOSTAB® B 8870 in einer Hartschaumrezeptur getestet. Es handelt sich um die Leichtschaumformulierung DCS 534.01. Verschäumt wird mit einem Isocyanat-Index von 41 zu einem Raumgewicht von ungefähr 12 kg/m³. Die Startermoleküle der Polyole sind aliphatischer Natur. Die Additivkonzentration beträgt 1,5 Teile von 100.

| Vergleich 5 | | |
|---|---|---|
| verwendetes Additiv | Schaumstörungen | Zellen/cm |
| TEGOSTAB® B 8870 | sehr wenige | 34 |
| Beispiel 3 | keine | 40 |
| Beispiel 4 | wenige | 34 |

Dieser Vergleich zeigt deutlich, daß eine aromatische Modifikation der Polyetherkette im Polyethersiloxan die Feinzelligkeit, ausgedrückt durch die Anzahl der Zellen pro cm, erhöht. Der kommerzielle Stabilisator und die unmodifizierte Struktur bleiben hinter diesem Ergebnis auch bezüglich des Auftretens von Schaumstörungen zurück.

Diese anwendungstechnischen Ergebnisse zeigen eindeutig, daß durch Styroloxidmodifikation des Polyethers, der den Rohstoff für die Synthese des Polyethersiloxans darstellt, die Stabilisatorwirkungen von erfindungsgemäßen Siliconpolyether-Copolymeren bei der Polyurethanverschäumung in feinen Bereichen eingestellt werden können.

So ist es möglich, die Schäume jeweils bezüglich der relevanten Eigenschaften, im Weichschaum z. B. bezüglich Raumdichte, Rückfallhöhe und Kollapsvermeidung, im Hartschaum z. B. Feinzelligkeit und Fehlerbilder, zu optimieren.

Die verbesserte Wirksamkeit des styroloxidmodifizierten Silicon-Polyether-Copolymeren bleibt auch in Mischungen mit Polyethern und Silicon-Polyether-Copolymeren, die über keinen aromatischen Rest verfügen, erhalten.

## Patentansprüche

1. Verwendung von organofunktionell modifizierten Polysiloxanen der allgemeinen Formel I 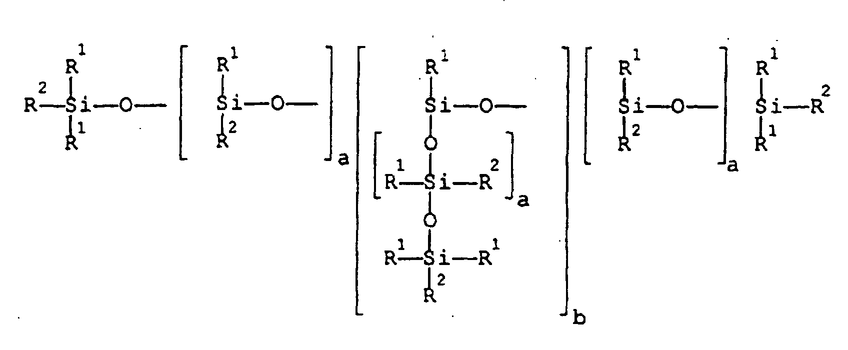 als Additiv bei der Polyurethanschaumherstellung, wobei die Reste
R¹ Alkylreste mit 1 bis 4 Kohlenstoffatomen oder Arylreste sind, jedoch mindestens 80 % der Reste R¹ Methylreste sind,
R² R¹ und/oder R³ und/oder R⁴ sind, mit der Maßgabe, daß pro Silicon-Polyether-Copolymermolekül mindestens ein Rest R³ vorhanden ist,
R³ ein Polyetherrest der Formel II
- (Y)ₑ[O(C₂H_{4-d}R'_{d}O)ₘ(CₓH₂ₓO)ₚZ]_{w} ist, mit der Maßgabe, daß
e = 0 oder 1,
w = 1 bis 4,
d = 1 bis 3,
m ≥ 1,
x = 2 bis 4 und
p ≥ 1 sind, und
Y ein (w+1)-bindiger Kohlenwasserstoffrest ist, der auch verzweigt sein kann,
R' ausgewählt aus der Gruppe der einwertigen, gegebenenfalls aromatischen Kohlenwasserstoffreste von C₁ bis C₁₈ ist, mit der Maßgabe, daß auch unterschiedliche Reste miteinander kombiniert werden können, jedoch pro Silicon-Polyether-Copolymermolekül mindestens ein Rest R' ein gegebenenfalls substituierter, aromatischer Rest ist,
Z ein Wasserstoffrest oder ein einwertiger organischer Rest ist,
die Summe m + p = 3 bis 100 ist,
R⁴ ein Polyetherrest der Formel III
- (F)_{f}[O(CₓH₂ₓO)ᵣZ]_{g} ist, mit der Maßgabe, daß
f = 0 oder 1,
x = 2 bis 4,
g = 1 bis 4 und
r ≥ 1 sind,
F ein (g+1)-bindiger Kohlenwasserstoffrest ist, der auch verzweigt sein kann,
a eine Zahl von 1 bis 100 ist, wenn b eine Zahl von 6 bis 8 ist,
a eine Zahl von 1 bis 200 ist, wenn b eine Zahl von 3 bis 6 ist,
a eine Zahl von 1 bis 300 ist, wenn b eine Zahl von 0 bis 3 ist,
b = 0 bis 8.

2. Verwendung eines Additivgemisches bei der Herstellung von Polyurethanen, bestehend aus mindestens 60 % der Copolymeren der allgemeinen Formel I und bis zu 40 % eines an sich bekannten Polysiloxan-Polyoxyalkylen-Blockcopolymeren ohne aromatische Reste im Polyetherblock.

## Claims

1. Use of organo functionally modified polysiloxanes of the general formula I 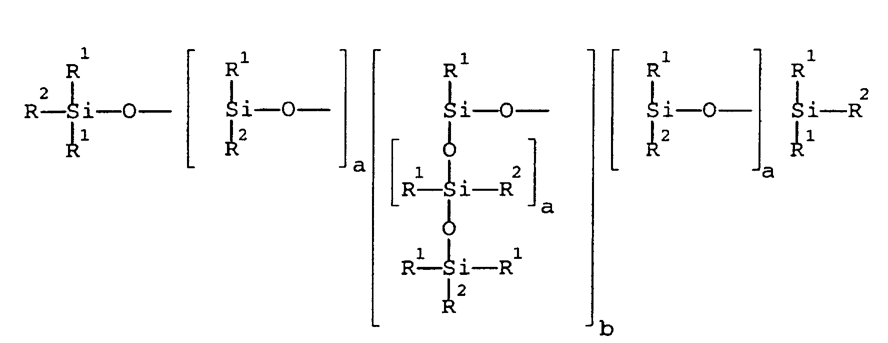 as additives in polyurethane foam production, where the radicals
R¹ are alkyl radicals having from 1 to 4 carbon atoms or aryl radicals, but with at least 80% of the radicals R¹ being methyl radicals,
R² are R¹ and/or R³ and/or R⁴, with the proviso that at least one radical R³ is present per silicone-polyether copolymer molecule,
R³ is a polyether radical of the formula II
- (Y)ₑ[O(C₂H_{4-d}R'_{d}O)ₘ(CₓH₂ₓO)ₚZ]_{w}, with the proviso
that
e = 0 or 1,
w = 1 to 4,
d = 1 to 3,
m ≥ 1,
x = 2 to 4 and
p ≥ 1, and,
Y is a (w+1)-valent hydrocarbon radical which may also be branched,
R' is selected from the group consisting of monovalent, aliphatic or aromatic hydrocarbons from C₁ to C₁₈, with the proviso that different radicals can also be combined with one another but at least one radical R' within the silicone-polyether copolymer molecule is an unsubstituted or substituted aromatic radical,
Z is hydrogen or a monovalent organic radical,
the sum m + p = 3 to 100,
R⁴ is a polyether radical of the formula III
- (F)_{f}[O(CₓH₂ₓO)ᵣZ]_{g}, with the proviso that
f = 0 or 1,
x = 2 to 4,
g = 1 to 4 and
r ≥ 1,
F is a (g+1)-valent hydrocarbon radical which may also be branched,
a is from 1 to 100 when b is from 6 to 8,
a is from 1 to 200 when b is from 3 to 6,
a is from 1 to 300 when b is from 0 to 3,
b = 0 to 8.

2. Use in the production of polyurethanes of an additive mixture comprising at least 60% of the copolymers of the general formula I and up to 40% of a polysiloxane-polyoxyalkylene block copolymer known per se without aromatic radicals in the polyether block.

## Revendications

1. Utilisation de polysiloxanes modifiés par des organofonctions, de formule générale I, 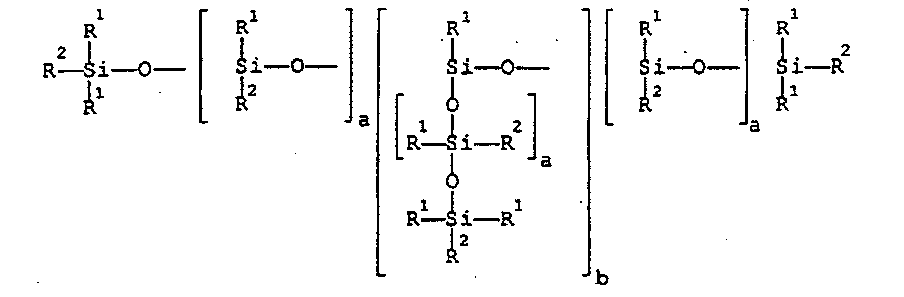 comme additif lors de la production de mousse de polyuréthanne, les radicaux
R¹ représentant des radicaux alkyle comportant de 1 à 4 atomes de carbone ou des radicaux aryle, au moins 80% des radicaux R¹ étant cependant des radicaux méthyle,
R² représentant R¹ et/ou R³ et/ou R⁴ avec la précision qu'au moins un radical R³ est présent par molécule de copolymère silicone-polyéther,
R³ représentant un radical polyéther de formule II,
- (Y)ₑ[O(C₂H_{4-d}R'_{d}O)ₘ(CₓH₂ₓO)ₚZ]_{w}, avec la précision que,
e = 0 ou 1,
w = 1 à 4,
d = 1 à 3,
m ≥ 1,
x = 2 à 4, et
p ≥ 1 et,
Y est un radical hydrocarboné à liaison (w+1), qui peut aussi être ramifié,
R' est choisi dans le groupe des radicaux hydrocarbonés monovalents, le cas échéant aromatiques, en C₁ à C₁₈, avec la précision que des radicaux différents peuvent aussi être combinés entre eux, mais que, par molécule de copolymère silicone-polyéther, au moins un radical R' représente un radical aromatique, le cas échéant substitué,
Z représente un radical hydrogène ou un radical organique monovalent,
la somme de m + p est égale à 3 à 100,
R⁴ représentant un radical polyéther de formule III,
- (F)_{f}[O(CₓH₂ₓO)ᵣZ]_{g}, avec la précision que,
f = 0 ou 1,
x = 2 à 4,
g = 1 à 4, et
r ≥ 1,
F est un radical hydrocarboné à liaison (g+1) qui peut aussi être ramifié,
a représente un nombre de 1 à 100, lorsque b représente un nombre de 6 à 8,
a représente un nombre de 1 à 200, lorsque b représente un nombre de 3 à 6,
a représente un nombre de 1 à 300, lorsque b représente un nombre de 0 à 3,
b = 0 à 8.

2. Utilisation d'un mélange additif lors de la production de polyuréthannes, constitué d'au moins 60% de copolymères de formule générale I et jusqu'à 40% d'un copolymère séquencé polysiloxane-polyoxyalkylène connu en soi sans radicaux aromatiques dans la séquence de polyéther.
